# EUROPÄISCHE PATENTANMELDUNG

(11) **EP 4 389 650 A1**
(43) Veröffentlichungstag der Anmeldung: **26.06.2024**
(21) Anmeldenummer: 23216733.8
(22) Anmeldetag: 14.12.2023
(51) Int. Cl.: B65G 21/06, B65G 23/22

(54) **TRANSPORTEINRICHTUNG ZUM TRANSPORTIEREN VON VERPACKUNGEN ODER VERPACKUNGSBESTANDTEILEN**

(30) Priorität: 22.12.2022 DE 102022134453
(71) Anmelder: MULTIVAC Sepp Haggenmüller SE & Co. KG, 87787 Wolfertschwenden (DE)
(72) Erfinder: HUBER, Michael, 87764 Maria Steinbach (DE)
(74) Vertreter: Grünecker Patent- und Rechtsanwälte PartG mbB

(57) **Zusammenfassung**

Transporteinrichtung zum Transportieren von Verpackungen oder Verpackungsbestandteilen, die Transporteinrichtung umfassend ein Grundgestell und einen mit dem Grundgestell und einen mit dem Grundgestell lösbar verbundenen Bandkörper, wobei der Bandkörper ein Transportband, das eine Transportebene definiert, und eine Antriebsrolle zum Antreiben des Transportbandes umfasst, wobei das Grundgestell einen Antrieb und ein Getriebe zum Übertragen einer Kraft von dem Antrieb auf die Antriebsrolle umfasst, wobei die Antriebsrolle und der Antrieb auf derselben Seite der Transportebene angeordnet sind und der Abstand des Antriebs zur Transportebene größer ist als der Abstand der Antriebsrolle zur Transportebene.

## Beschreibung

Die vorliegende Erfindung betrifft eine Transporteinrichtung zum Transportieren von Verpackungen oder Verpackungsbestandteilen gemäß unabhängigem Anspruch 1 sowie einen Bandkörper gemäß Anspruch 12 und ein Sortiment von Bandkörpern gemäß Anspruch 13.

### Stand der Technik

Transporteinrichtungen zum Transportieren von Verpackungen oder Verpackungsbestandteilen insbesondere im Bereich der Lebensmittelindustrie sind aus dem Stand der Technik hinreichend bekannt.

Die Transporteinrichtungen können beispielsweise Transportbänder oder Transportketten umfassen und weisen üblicherweise ferner ein Gestell sowie eine Antriebseinheit, die das Transportband beispielsweise über geeignete Getriebe in Bewegung versetzen kann, auf.

Aus der EP 2 851 304 A1 ist eine solche Transporteinrichtung bekannt. Diese umfasst einen Bandkörper mit einem Transportband zum Transportieren von Schalen sowie eine Antriebseinrichtung. Der Bandkörper dabei wechselbar ausgebildet.

Im bisherigen Stand der Technik ist ein Austausch des Bandkörpers zwar grundsätzlich möglich, gestaltet sich jedoch schwierig. Auch das Umbauen der Transporteinrichtung auf mehrspurigen Transport ist nur schwierig möglich.

### Aufgabe

Ausgehend vom bekannten Stand der Technik besteht die zu lösende technische Aufgabe somit darin, eine Transporteinrichtung zum Transportieren von Verpackungen oder Verpackungsbestandteilen anzugeben, die einen einfacheren Austausch des Bandkörpers und/oder einen einfacheren Umbau der Transporteinrichtung auf eine andere Anzahl von Transportbändern ermöglicht.

### Lösung

Diese Aufgabe wird erfindungsgemäß durch die Transporteinrichtung gemäß unabhängigem Anspruch 1 sowie dem Bandkörper gemäß unabhängigem Anspruch 12 und das Sortiment von Bandkörpern zur Verwendung in einer Transporteinrichtung gemäß unabhängigem Anspruch 13 gelöst.

Die erfindungsgemäße Transporteinrichtung zum Transportieren von Verpackungen oder Verpackungsbestandteilen umfasst ein Grundgestell und einen mit dem Grundgestell und einen mit dem Grundgestell lösbar verbundenen Bandkörper, wobei der Bandkörper ein Transportband, das eine Transportebene definiert, und eine Antriebsrolle zum Antreiben des Transportbandes umfasst, wobei das Grundgestell einen Antrieb und ein Getriebe zum Übertragen einer Kraft von dem Antrieb auf die Antriebsrolle umfasst, wobei die Antriebsrolle und der Antrieb auf derselben Seite der Transportebene angeordnet sind und der Abstand des Antriebs zur Transportebene größer ist als der Abstand der Antriebsrolle und/oder wobei die Antriebsrolle und eine Komponente des Getriebes auf derselben Seite der Transportebene angeordnet sind und der Abstand der Komponente des Getriebes zur Transportebene größer ist als der Abstand der Antriebsrolle zur Transportebene.

Die Anordnung der Antriebsrolle und des Antriebs und/oder der Komponente des Getriebes auf derselben Seite der Transportebene kann insbesondere eine Anordnung unterhalb der Transportebene, also in einem Bereich, der auf der gegenüberliegenden Seite der Transportebene verglichen mit dem Bereich, in dem Verpackungen oder Verpackungsbestandteile transportiert werden können, liegt) erfolgen. Antrieb bzw. Komponente des Getriebes und Antriebsrolle sind so auch vor Verunreinigungen geschützt und können einen störungsfreien Antrieb des Transportbandes bewirken.

Unter einem Getriebe soll im Folgenden jede Einrichtung verstanden werden, die eine Übertragung der Antriebskraft des Antriebs auf die Antriebsrolle bewirken kann. Hierzu zählen insbesondere Getriebe mit identischer Übersetzung (Übersetzungsverhältnis von 1) oder ein auf einer Antriebswelle des Motors axial aufgebrachtes Übertragungselement. Auch ein oder mehrere ineinandergreifende Zahnräder können hier als Getriebe verwendet werden, wobei ein erstes Zahnrad drehfest mit einer Antriebswelle des Antriebs und ein zweites Zahnrad drehfest mit einer Antriebswelle der Antriebsrolle verbunden sein können und optional ein oder mehrere Zahnräder zwischen dem ersten und dem zweiten Zahnrad drehbar zur Übertragung der Drehbewegung des ersten Zahnrads auf das zweite Zahnrad angeordnet sein können.

Unter der Komponente des Getriebes soll im Folgenden beispielsweise ein Zahnrad des Getriebes, insbesondere ein Zahnrad des Getriebes, das antriebsseitig mit der Antriebsrolle verbunden ist (also die Antriebskraft direkt auf die Antriebsrolle oder ein mit der Antriebsrolle drehfest verbundenes Zahnrad überträgt) verstanden werden.

Durch die Anordnung des Antriebs und/oder der Komponente des Getriebes in einem Abstand zur Antriebsrolle, so dass der Antrieb und/oder die Komponente des Getriebes weiter von der Transportebene entfernt ist als die Antriebsrolle wird die Zugänglichkeit zum Bandkörper und auch zur Antriebsrolle sowie damit verbundenen Teilen erleichtert. Damit wird der Wechsel des Bandkörpers aber auch ein Umbau auf andere Zahlen von Transportbändern erleichtert.

Es kann vorgesehen sein, dass der Bandkörper ein zweites Transportband und eine zweite Antriebsrolle zum Antreiben des zweiten Transportbandes umfasst, und wobei der Antrieb an einer ersten Seitenfläche des Grundgestells angeordnet ist und ein zweiter Antrieb an einer zweiten Seitenfläche des Grundgestells angeordnet ist, wobei das Grundgestell ein zweites Getriebe zum Übertragen einer Kraft von dem zweiten Antrieb auf die zweite Antriebsrolle umfasst und die zweite Antriebsrolle und der zweite Antrieb auf derselben Seite der Transportebene angeordnet sind und der Abstand des zweiten Antriebs zur Transportebene größer ist als der Abstand der zweiten Antriebsrolle zur Transportebene.

Die zweite Antriebsrolle kann dabei um eine zweite Antriebsachse drehbar gelagert sein, die entweder parallel oder identisch zu der Antriebsachse bewegen, um die die erste Antriebsrolle rotiert. Unter der ersten und der zweiten Seitenfläche des Grundgestells werden Elemente des Grundgestells verstanden, die bevorzugt nicht in der Transportebene liegen.

Die Antriebe können insbesondere auf gegenüberliegenden Seiten der Transporteinrichtung an entsprechenden Seitenflächen des Grundgestells angeordnet sein. Die Antriebe können auf selber Höhe oder auf unterschiedlichen Höhen bzw. in unterschiedlichen Abständen zur Transportebene angeordnet sein. Mit dieser Ausführungsform ist der Betrieb der Transporteinrichtung beispielsweise auch mit unterschiedlich schnell bewegten Transportbändern möglich, wobei gleichzeitig ein einfacher Austausch des Bandkörpers erzielt wird.

In einer Weiterbildung dieser Ausführungsform ist vorgesehen, dass die Antriebsrolle und die zweite Antriebsrolle um parallele Antriebsachsen drehbar sind. In einer speziellen Ausführungsform können die parallelen Antriebsachsen identisch verlaufen bzw. zusammenfallen.

In einer Ausführungsform umfasst das Grundgestell ein Abdeckelement zum Abdecken des Antriebs und das Abdeckelement erstreckt sich wenigstens teilweise zwischen der Transportebene und dem Antrieb. Hiermit wird der Antrieb vor Verunreinigungen geschützt, wobei gleichzeitig ein Schutz des Antriebs vor Verunreinigungen erzielt wird.

Ferner kann vorgesehen sein, dass das Getriebe wenigstens zwei um zueinander beabstandete, parallele Drehachsen drehbar gelagerte Zahnräder umfasst und ein erstes Zahnrad mit einer Antriebsachse des Antriebs und ein zweites Zahnrad mit der Antriebsrolle wirkverbunden sind. In dieser Ausführungsform ist es nicht notwendig, dass das Getriebe ein Übersetzungsverhältnis von der Drehzahl des Antriebs auf die Drehzahl der Antriebsrolle realisiert bzw. dieses Übersetzungsverhältnis kann auch identisch 1 sein. Andere Übersetzungsverhältnisse sind jedoch ebenfalls denkbar. Das Getriebe kann auf derselben Seite der Seitenfläche des Grundgestells wie der Antrieb angeordnet sein oder auf einer gegenüberliegenden Seite der Seitenfläche des Grundgestells, an dem der Antrieb angeordnet ist. Hierdurch kann eine zuverlässige Kraftübertragung vom Antrieb auf die Antriebswelle bewirkt werden, wobei gleichzeitig ein einfacher Austausch des Bandkörpers gewährleistet bleibt.

Der Antrieb und/oder der zweite Antrieb können lösbar mit dem Grundgestell verbunden sein. Diese Ausführungsform gewährleistet einen einfachen Austausch der Antriebe.

Weiterhin kann der Bandkörper als werkzeuglos von dem Grundgestell lösbar ausgebildet sein. Der Begriff "werkzeuglos" soll hier so verstanden werden, dass die Verbindung zwischen Grundgestell und Bandkörper durch Elemente realisiert wird, die ohne die Verwendung von Werkzeugen, wie beispielsweise Schraubenzieher, gelöst werden können. Hierzu zählen beispielsweise Steck- oder Klickverbindungen. Unterstützend oder alternativ dazu können auch Magnete verwendet werden, um die lösbare Verbindung zu realisieren.

In einer Ausführungsform umfasst das Grundgestell zwei parallel zueinander verlaufende Seitenfläche, die quer zur Transportrichtung beabstandet angeordnet sind und wobei der Bandkörper in Aufnahmen der zwei Seitenflächen angeordnet ist.

In die Aufnahmen kann der Bandkörper beispielsweise durch geeignete Auswölbungen oder Stifte eingelassen werden und separat (beispielsweise durch Klickverbindungen oder Ähnliches) fixiert werden. Es ist ebenfalls möglich, dass die Aufnahmen bereits die lösbare Verbindung mit dem Bandkörper herstellen und in diesem Sinne als Verbindungselemente dienen. Dabei kann der Bandkörper in den Aufnahmen durch einen Kraft- und/oder Formschluss fixiert werden, so dass er aus den Aufnahmen auch gelöst werden kann.

Es kann vorgesehen sein, dass der Antrieb ein Servomotor ist und eine Drehachse des Servomotors parallel oder senkrecht zu einer Rotationsachse der Antriebsrolle verläuft. Durch die beabstandete Anordnung des Antriebs zur Transportebene kann eine für die Kraftübertragung effiziente Anordnung des Antriebs und insbesondere der Drehachse des Antriebs relativ zur Antriebsrolle realisiert werden, womit auch eine platzsparende Konstruktion möglich wird, ohne die Austauschbarkeit des Bandkörpers zu beeinträchtigen.

Der Bandkörper und das Grundgestell können zueinander komplementäre, lösbare Verbindungselemente umfassen. Komplementäre, lösbare Verbindungselemente sind beispielsweise durch Klickverbindungen und Steckverbindungen realisierbar, wobei jeweils ein Verbindungselement des Bandkörpers und ein dazu komplementäres Verbindungselement des Grundgestells die lösbare Verbindung miteinander insbesondere durch einen Formschluss und/oder Kraftschluss realisieren. Hiermit wird das Austauschen des Bandkörpers vereinfacht.

In einer Weiterbildung dieser Ausführungsform ist vorgesehen, dass die zueinander komplementären, lösbaren Verbindungselemente eine Spannvorrichtung oder einen Schnappverschluss bilden. Diese Ausgestaltungen sind von einem Bediener einfach handhabbar und begünstigen somit den einfachen Austausch des Bandkörpers.

Erfindungsgemäß ist weiterhin ein Bandkörper zur Verwendung in einer Transporteinrichtung gemäß einer der vorangegangenen Ausführungsformen vorgesehen, wobei der Bandkörper wenigstens ein Transportband und wenigstens eine Antriebsrolle umfasst.

Ferner wird erfindungsgemäß ein Sortiment von Bandkörpern zur Verwendung in einer Transporteinrichtung nach einer der vorangegangenen Ausführungsformen angegeben, wobei zumindest ein erster Bandkörper des Sortiments genau ein Transportband und genau eine Antriebsrolle umfasst und wobei zumindest ein zweiter Bandkörper des Sortiments genau zwei Transportbänder und genau zwei Antriebsrollen umfasst.

Hierdurch wird eine Transporteinrichtung in Kombination mit dem Sortiment von Bandkörpern bereitgestellt, mit der ein einfaches Umrüsten auf unterschiedliche Anforderungen hinsichtlich der Produktion ermöglicht wird, insbesondere hinsichtlich eines einreihigen oder zweireihigen Transports von Verpackungen oder Verpackungsbestandteilen.

### Kurze Beschreibung der Figuren

- Fig. 1: zeigt eine perspektivische Ansicht einer Transporteinrichtung gemäß einer Ausführungsform
- Fig. 2a bis c: zeigen verschiedene Ausführungsformen in einer Schnittansicht
- Fig. 3: zeigt eine Ausführungsform der Transporteinrichtung mit einem Bandkörper mit zwei Transportbändern
- Fig. 4a und b: zeigen verschiedene Ausführungsformen von lösbaren Verbindungselementen
- Fig. 5: zeigt eine Ausführungsform eines Sortiments von Bandkörpern

### Ausführliche Beschreibung

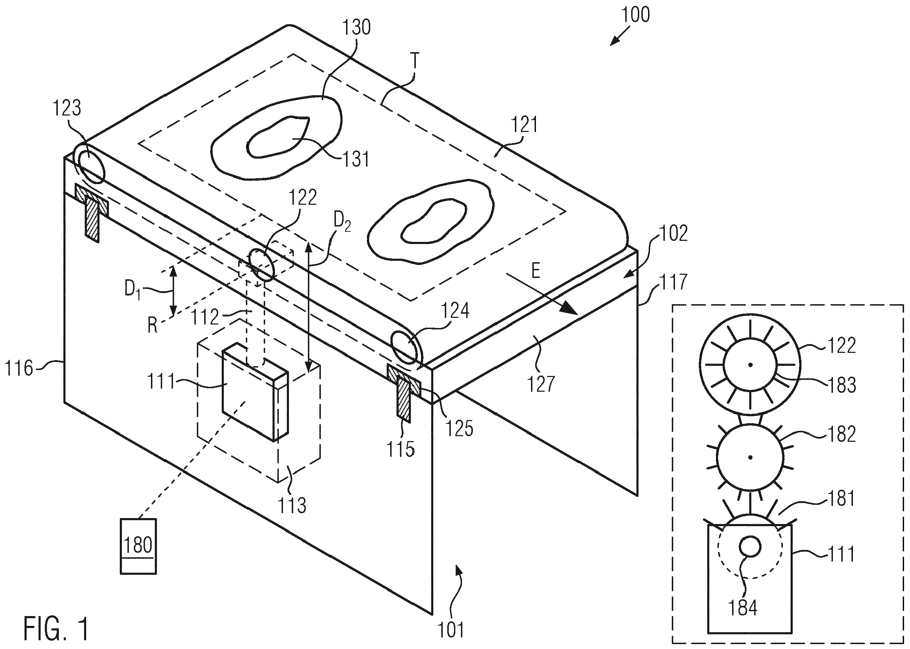

Fig. 1 zeigt eine Transporteinrichtung 100 gemäß einer Ausführungsform. Die Transporteinrichtung ist zum Transportieren von Verpackungen oder Teilen von Verpackungen 130 geeignet. Bei den Verpackungen 130 kann es sich beispielsweise um bereits mit einem Produkt 131 befüllte und verschlossene Verpackungen handeln. Werden mit der Transporteinrichtungen Teile von Verpackungen 130 transportiert, kann es sich bei diesen Teilen beispielsweise um eine Verpackungsmulde mit optional bereits darin eingefülltem Produkt oder ähnlichem handeln. Die Erfindung ist hinsichtlich der zu transportierenden Verpackungen oder Teilen von Verpackungen nicht beschränkt, solange diese Verpackungen mit Hilfe dieser Transporteinrichtung 100 transportiert werden können.

Die Transporteinrichtung 100 umfasst in dieser Ausführungsform ein Grundgestell 101. Dieses Grundgestell 101 kann beispielsweise durch zumindest zwei zueinander parallel verlaufende Seitenflächen 116 und 117 gebildet sein oder diese umfassen. Die Seitenflächen 116 und 117 müssen dabei nicht zwingend parallel verlaufen, sondern können auch einen gemeinsamen Winkel miteinander einschließen. Beispielsweise kann die Anordnung der Seitenflächen 116 und 117 derart vorgesehen sein, dass sie in der dargestellten Ausführungsform unten im Bild einen größeren Abstand zueinander aufweisen als oben. Damit hat das Grundgestell 101 beispielsweise eine Form eines Prismas mit zwei zueinander parallelen, trapezförmigen Seitenflächen. Die Seitenflächen 116 und 117 müssen nicht die einzigen Seitenflächen sein und es können auch weitere Seitenflächen als Teil des Grundgestells vorgesehen sein. Insbesondere müssen die Seitenflächen nicht eben sein, sondern können beliebig geformt, beispielsweise zumindest teilweise gekrümmt sein.

Neben dem Grundgestell 101 umfasst die Transporteinrichtung 100 ferner einen Bandkörper 102. Der Bandkörper 102 umfasst zumindest ein Transportband 121, auf dem die Verpackungen oder Teile von Verpackungen 130 entlang einer Transportrichtung E transportiert werden können. Ferner umfasst der Bandkörper 102 wenigstens eine Antriebsrolle 122, die derart mit dem Transportband wirkverbunden ist, dass eine Drehung der Antriebsrolle um eine ihr zugeordnete Rotationsachse R ein Antreiben des Transportbandes 121 bewirken kann. Der Bandkörper 102 kann, muss jedoch nicht ferner einen Grundkörper 127 umfassen, in dem die Antriebsrolle 122 beispielsweise drehbar gelagert sein kann. Neben der Antriebsrolle 122 kann der Bandkörper 102 auch weitere Führungsrollen 123 und 124 umfassen, die beispielsweise dazu vorgesehen sein können, das Transportband 121 auf seiner gesamten Länge zu führen und/oder unter Spannung zu halten.

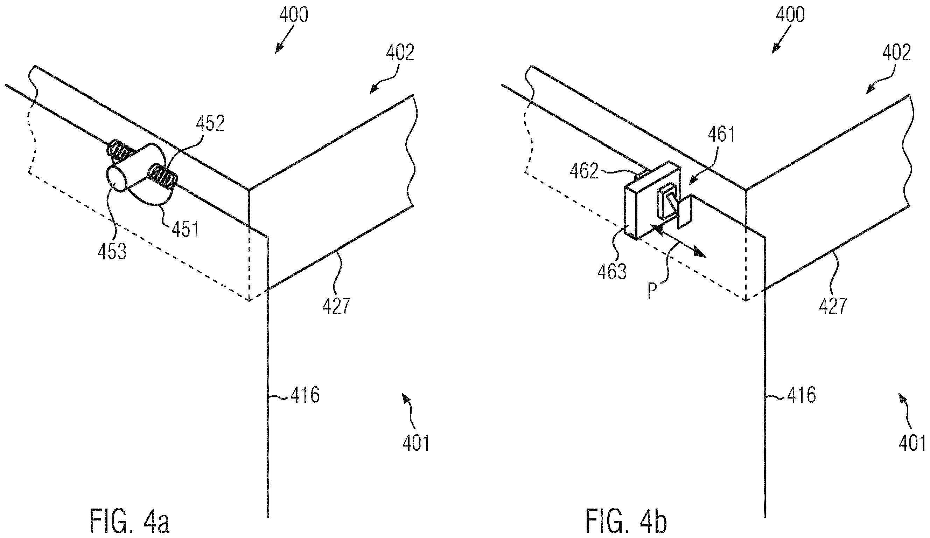

Der Bandkörper 102 und das Grundgestell 101 sind bevorzugt über geeignete Verbindungselemente 115 und 125 lösbar miteinander verbunden. Die lösbare Verbindung von Grundgestell 101 und Bandkörper 102 ist dabei bevorzugt als eine werkzeuglos lösbare Verbindung ausgestaltet, die, wie mit Bezug auf die Fig. 4a und 4b noch beschrieben wird, von einem Bediener ohne die Verwendung von Werkzeug, wie beispielsweise einem Schraubenzieher gelöst und befestigt werden kann.

Das dem Bandkörper 102 zugehörige Verbindungselement 125 kann, sofern vorgesehen, bevorzugt mit dem Grundkörper 127 des Bandkörpers 102 verbunden sein. Das dem Grundgestell 101 zugeordnete Verbindungselement 115, soweit vorgesehen, kann bevorzugt mit einer Seitenfläche 116 bzw. 117 des Grundgestells verbunden sein. Dabei kann vorgesehen sein, dass auf jeder Seite des Grundgestells 101 (beispielsweise an den Seitenflächen 116 und 117) geeignete Verbindungselemente 115 angeordnet sind. Selbiges gilt für den Bandkörper 102 und das ihm zugeordnete Verbindungselement 125.

Insbesondere können das Grundgestell 101 bzw. der Bandkörper 102 mehr als ein Verbindungselement 115 bzw. 125 umfassen. Diese können ein zentriertes Befestigen des Bandkörpers am Grundgestell, insbesondere ein selbstzentriertes Befestigen des Bandkörpers am Grundgestell gewährleisten, so dass eine zuverlässige Ausrichtung des Bandkörpers und damit des Transportbandes 121 relativ zum Grundgestell gewährleistet ist. Hiermit kann auch bei Austausch des Bandkörpers eine korrekte Positionierung des Transportbandes ohne erforderliche Nachjustage oder mit vermindertem Justageaufwand gewährleistet werden.

Das Grundgestell umfasst ferner einen Antrieb 111, der mit der Antriebsrolle 122 wirkverbunden ist, so dass eine Antriebskraft des Antriebs 111 an die Antriebsrolle übertragen werden kann, so dass diese in Drehung versetzt wird und damit das Transportband 121 in Bewegung versetzen kann.

Der Antrieb 111 kann insbesondere als Servomotor oder Stellantrieb ausgestaltet sein und über eine geeignete Steuereinrichtung 180 Steuerbefehle erhalten, um die Antriebskraft zu steuern. Die Steuereinrichtung 180 kann als Computer oder zentrale Steuereinrichtung einer zugehörigen Verpackungsmaschine ausgestaltet sein. Dem Antrieb kann optional eine Abdeckung 113 zugeordnet sein, die den Antrieb vor Umwelteinflüssen schützen kann. Der Antrieb kann an dem Grundgestell 101 lösbar angeordnet sein, beispielsweise über Schraubverbindungen.

Die Verbindung des Antriebs 111 mit der Antriebsrolle 122 wird dabei bevorzugt über ein Getriebe 112 gewährleistet, das die Antriebskraft des Antriebs 111 auf die Antriebsrolle 122 überträgt. Dabei kann das Getriebe ein geeignetes Übersetzungsverhältnis zwischen der Drehzahl des Antriebs 111 und der Drehzahl der Antriebsrolle gewährleisten. Dieses Übersetzungsverhältnis kann jedoch auch eine identische Übersetzung (Übersetzungsverhältnis identisch 1) sein. Grundsätzlich wird das Getriebe 112 erfindungsgemäß nur für die Kraftübertragung vom Antrieb 111 zur Antriebsrolle 122 benötigt.

Erfindungsgemäß ist vorgesehen, dass die Antriebsrolle 122 und der Antrieb 111 und/oder zumindest eine Komponente des Getriebes 112 auf derselben Seite des Transportbandes 121, insbesondere auf derselben Seite einer Transportebene T, die die Ebene angibt, in der die Produkte in dem Transportband 121 transportiert werden, angeordnet sind. Weiterhin ist erfindungsgemäß vorgesehen, dass der Abstand zwischen dem Antrieb 111 und/oder der Komponente des Getriebes 112 und der Transportebene T (die kürzeste Verbindung zwischen dem Antrieb 111 und/oder der Komponente des Getriebes 112 und der Transportebene T), D₂, größer ist als der Abstand D₁ der Antriebsrolle 122 von der Transportebene T (die kürzeste Verbindung zwischen der Antriebsrolle 122 und der Transportebene T).

Ist vorgesehen, dass der Abstand der Komponente des Getriebes 112 zur Transportebene T größer ist als der Abstand der Antriebsrolle 122 zur Transportebene, so kann der Antrieb 111 auch auf derselben Höhe bzw. im selben Abstand zur Transportebene T angeordnet sein, wie diese Komponente und/oder wie die Antriebsrolle 122.

Während in der Figur 1 der Antrieb 111 als lediglich in einer Richtung senkrecht zur Transportebene T versetzt zur Antriebsrolle 122 gezeigt ist, versteht es sich, dass ganz grundsätzlich der Antrieb zusätzlich zu diesem Versatz auch in einer Richtung parallel zur Transportebene T relativ zur Antriebsrolle versetzt angeordnet sein kann.

Bevorzugt kann der Abstand D₂ größer sein als der Durchmesser der Antriebsrolle 122 oder als die Summe aus dem Abstand D₁ und dem Durchmesser der Antriebsrolle 122, so dass der Antrieb 111 und/oder die Komponente des Getriebes 112, gesehen von der Transportebene T aus, unterhalb der Antriebsrolle 122 liegt.

Besonders bevorzugt ist der Abstand D₂ weiterhin größer als die Ausdehnung des Bandkörpers 102 in einer Richtung senkrecht zur Transportebene T. Insbesondere befinden sich bevorzugt sämtliche Komponenten des Bandkörpers oberhalb des Antriebs 111 und/oder der Komponente des Getriebes 112, was einen einfachen Aufbau des Bandkörpers ohne Beeinträchtigung des Antriebs 111 bzw. der Komponente des Getriebes 112 und insbesondere ohne die Notwendigkeit des Entfernens des Antriebs 111 und/oder der Komponente des Getriebes 112 ermöglicht.

Das Getriebe 112 kann ein oder mehrere Zahnräder (von denen zumindest eines als die oben beschriebene Komponente des Getriebes verstanden wird) umfassen, wobei eines der Zahnräder bevorzugt mit einer Antriebswelle oder Drehwelle des Antriebs 111 (drehfest) verbunden ist und wenigstens ein weiteres Zahnrad vorgesehen ist, das die von dem Antrieb 111 auf dieses Zahnrad übertragene Antriebskraft an die Antriebsrolle 122, insbesondere ein mit der Antriebsrolle drehfest verbundenes Zahnrad übertragen kann.

Dies ist auch in der gestrichelten zusätzlichen Darstellung der Fig. 1 zumindest schematisch gezeigt. Der Antrieb 111 umfasst eine Antriebswelle 184, die hier beispielhaft parallel zur Rotationsachse R der Antriebsrolle 122 verläuft. Ein Zahnrad 181 ist mit dieser Antriebswelle bzw. Drehwelle 184 drehfest verbunden (beispielsweise darauf angeschraubt) und dreht sich entsprechend mit selber Winkelgeschwindigkeit wie die Antriebswelle 184. Das Zahnrad 181 überträgt über mindestens ein weiteres Zahnrad 182 die Antriebskraft des Antriebs 111 an das mit der Antriebsrolle 122 drehfest verbundene Zahnrad 183. Sofern der Abstand der Komponente des Getriebes im Sinne der Erfindung beschrieben wird, kann bevorzugt das Zahnrad 182 die Komponente des Getriebes 112 bilden.

Soweit im Folgenden der Abstand des Antriebs von der Antriebsrolle diskutiert wird, gilt dies gleichsam für eine Ausführungsform, bei der eine Beabstandung der Komponente des Getriebes anstelle des Antriebs von der Antriebsrolle vorgesehen ist.

Während in dieser Ausführungsform die Antriebswelle um eine Drehachse drehbar gelagert ist, die parallel zur Rotationsachse R der Antriebsrolle 122 verläuft, ist dies so nicht zwingend. Es kann alternativ auch vorgesehen sein, dass der Antrieb 111 derart angeordnet ist, dass eine Rotationsachse einer entsprechenden Antriebswelle mit der Rotationsachse R der Antriebsrolle 122 einen Winkel einschließt, insbesondere senkrecht dazu verläuft. Über geeignete Positionierung der Zahnräder oder anderer Elemente des Getriebes 112 kann eine Kraftübertragung vom Antrieb auf die Antriebsrolle 122 dennoch gewährleistet werden. Entsprechende Getriebe 112 sind aus dem Stand der Technik hinreichend bekannt, so dass hierauf nicht weiter eingegangen wird.

Grundsätzlich sind jedoch erfindungsgemäß Ausführungsformen umfasst, in denen die Rotationsachse der Antriebswelle 184 des Antriebs 111 parallel oder nicht parallel, insbesondere senkrecht zur Rotationsachse R der Antriebsrolle 122 verläuft.

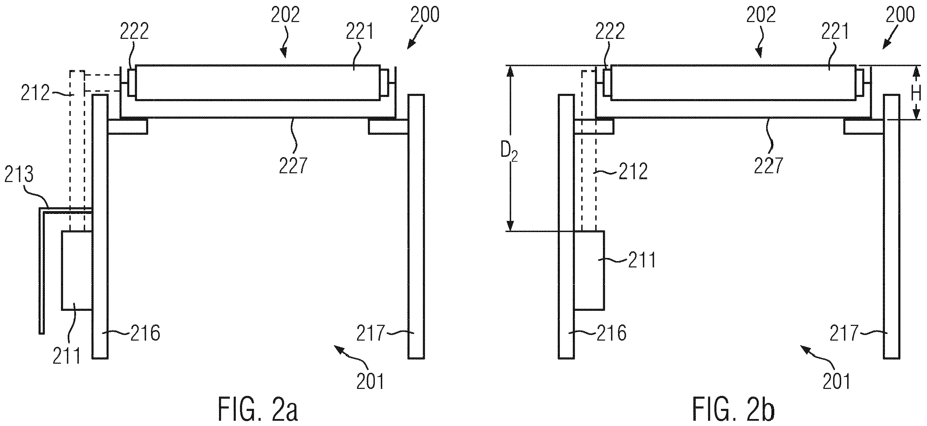

Die Fig. 2a bis 2c zeigen unterschiedliche Ausführungsformen der Transporteinrichtung 200 in einer Querschnittsansicht, die senkrecht zu der Transportrichtung E von Verpackungen 130 in der Transporteinrichtung bzw. dem Transportband 121 (siehe Fig. 1) verläuft.

In der Fig. 2a ist der Antrieb 211 an einer Seitenfläche 216 des Grundgestells 201 angeordnet, wobei er an einer Außenseite der Seitenfläche 216 angebracht ist (beispielsweise verschraubt ist). Optional kann der Antrieb 211 durch eine Abdeckung 213 geschützt sein, durch die sich das Getriebe 212, sofern es auf derselben Seite der Seitenfläche 216 angeordnet ist wie der Antrieb 211, zumindest teilweise hindurcherstrecken kann, so dass eine Übertragung der Antriebskraft des Antriebs 211 mittels des Getriebes 212 an die Antriebsrolle 222 gewährleistet ist.

In den in Fig. 2a dargestellten Ausführungsformen erstreckt sich der Bandkörper 202 mit dem Transportband 221, der Antriebsrolle 222 (und gegebenenfalls weiteren Rollen, wie dies in Fig. 1 beschrieben wurde) sowie dem Grundkörper 227 zwischen den Seitenflächen 216 und 217. Damit sind die Innenseiten der Seitenflächen 216 und 217 dem Bandkörper 202 zugewandt und der Antrieb 211 ist auf der gegenüberliegenden Seite der Seitenfläche 216 (deren Außenseite) angeordnet.

In der hier gezeigten Ausführungsform erstreckt sich das Getriebe 212 entlang derselben Seitenfläche 216 auf der Außenseite und überträgt die Antriebskraft an die Antriebsrolle 222. Mit dieser Ausführungsform ist der Antrieb 211 einfach zugänglich. Außerdem ist ein einfacher Austausch des Bandkörpers 202 ohne Beeinträchtigung des außerhalb des Bereichs, in dem der Bandkörper 202 angeordnet ist, angeordneten Antriebs 211 möglich.

In der Fig. 2b ist eine zur Fig. 2a alternative Ausführungsform gezeigt, in der der Antrieb 211 an der Innenseite einer Seitenfläche 216 des Grundgestells 201 angeordnet ist. Der Antrieb 211 ist somit in dem Bereich angeordnet, in dem sich auch der Bandkörper 202 erstreckt. In der hier gezeigten Ausführungsform ist der Abstand D₂ zur Transportebene T bevorzugt so gewählt, dass er größer als die Ausdehnung H des Bandkörpers in einer Richtung senkrecht zur Transportebene T ist. Damit kann der Bandkörper ohne weitere Beeinträchtigung des Antriebs 211 von dem Grundgestell 201 gelöst werden.

In dieser Ausführungsform erstreckt sich das Getriebe 212 von dem Antrieb 211 bis zur Antriebsrolle 222 ebenfalls auf der Innenseite der Seitenfläche 216. Mit dieser Ausführungsform ist der Antrieb 211 zwar weniger gut zugänglich, verglichen mit der in Fig. 2a gezeigten Ausführungsform, jedoch sind zusätzliche Komponenten, wie beispielsweise ein Abdeckelement 213 zum Schutz des Antriebs vor Umwelteinflüssen überflüssig.

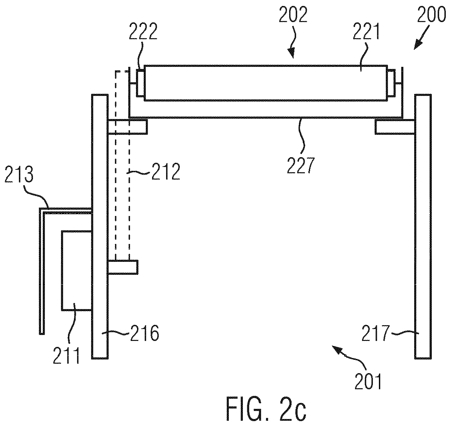

Fig. 2c zeigt eine zur Fig. 2a im Wesentlichen analoge Ausführungsform. Jedoch erstreckt sich hier das Getriebe 212 entlang der Innenseite der Seitenfläche 216, während der Antrieb 211 an der Außenseite der Seitenfläche 216 angeordnet ist. Das Getriebe 212 erstreckt sich somit entlang des Bereichs des Grundgestells 211, der von dem Bandkörper 202 zumindest teilweise begrenzt wird. Mit dieser Ausführungsform wird eine einfachere Zugänglichkeit des Antriebs 211 bei gleichzeitigem Schutz des Getriebes 212 vor weiteren Umwelteinflüssen gewährleistet.

Die Ausführungsform der Fig. 2c kann analog auch auf die Ausführungsform der Fig. 2b angewandt werden, wobei der Antrieb dann entlang der Innenseite der Seitenfläche 216 angeordnet ist und das Getriebe entsprechend Fig. 2a entlang der Außenseite der Seitenfläche 216 verläuft.

Es versteht sich, dass in den in Fig. 2a bis 2c gezeigten Ausführungsformen der Antrieb ebenfalls entsprechend jeder der in den Fig. 2a bis 2c gezeigten Ausführungsformen an der Seitenfläche 217 des Grundgestells angeordnet werden kann.

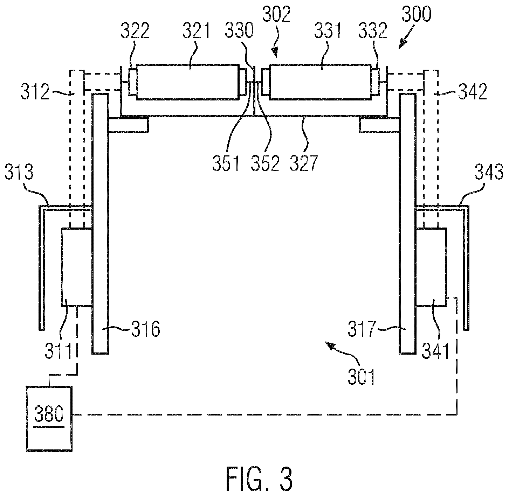

Fig. 3 zeigt eine weitere Ausführungsform der Erfindung, in der der Bandkörper 302 zwei Transportbänder 321 und 331 umfasst. Diese können in dem Grundkörper 327 des Bandkörpers 302 einerseits in äußeren Aufhängungen über geeignete Antriebsrollen 322 und 332 drehbar gelagert sein und zusätzlich über ein Halteelement 330, das sich zwischen dem ersten Transportband 321 und dem zweiten Transportband 331 erstreckt, drehbar gelagert sein. Hierzu können geeignete Verlängerungen 351 und 352 der Antriebsrollen 322 bzw. 332 verwendet werden. Wenn die Transportbänder 321 und 331 die gleiche Breite aufweisen (gemessen in einer Richtung quer zur Transportrichtung der Verpackungen in den Transportbändern), so kann das Element 330 in der Mitte des Bandkörpers 302 bzw. in der Mitte des Grundkörpers 327 angeordnet sein.

Alternativ kann auch vorgesehen sein, dass das erste Transportband 321 und das zweite Transportband 331 über eine gemeinsame Antriebsrolle (beispielsweise die Antriebsrolle 322) angetrieben werden.

In der hier gezeigten Ausführungsform sind zwei voneinander unabhängige Antriebsrollen 322 und 332 vorgesehen. Entsprechend dieser Ausführungsform ist jeder der Antriebsrollen 322 und 332 jeweils genau ein Antrieb 311 bzw. 341 zugeordnet. Diese sind analog zu den bisherigen Ausführungsformen über geeignete Getriebe 312 bzw. 342 mit den Antriebsrollen 322 bzw. 332 wirkverbunden, so dass eine Antriebskraft der Antriebe 311 bzw. 341 in eine Drehung der Antriebsrollen 322 bzw. 332 übersetzt werden kann.

Die Antriebe 311 bzw. 341 können analog zu den bisher beschriebenen Ausführungsformen bevorzugt an gegenüberliegenden Seitenflächen 316 und 317 des Grundgestells 301 der Transporteinrichtung 300 angeordnet sein. Dabei ist eine Anordnung für jeden der Antriebe 311 und 341 entsprechend jeder der Ausführungsformen 21 bis 2c möglich. Sind beide Antriebe 311 und 341, wie hier dargestellt, jeweils an der Außenseite der jeweiligen Seitenfläche 316 und 317 angeordnet, so können für jeden Antrieb geeignete Abdeckelemente 313 bzw. 343 vorgesehen sein, um die Antriebe vor Umwelteinflüssen zu schützen.

Alternativ zu der in Fig. 3 gezeigten Ausführungsform ist ebenso denkbar, dass einer der Antriebe entsprechend einer der Ausführungsformen der Fig. 2a bis 2c angeordnet ist, wohingegen der andere Antrieb entsprechend einer anderen Ausführungsform der Figuren 2a bis 2c angeordnet ist. Selbiges gilt für die Getriebe 312 bzw. 342.

Grundsätzlich gilt für den Abstand des zweiten Antriebs 341 zur Transportebene T dasselbe, wie mit Bezug auf den Antrieb 311 entsprechend der Ausführungsformen der Fig. 1 bis 2c Beschriebene. Der Antrieb 341 ist entsprechend wenigstens in einer Entfernung zu der Transportebene T angeordnet, der größer als der Abstand der Antriebsrolle zur Transportebene ist. Dabei müssen die Antriebe 311 und 341 nicht auf derselben Höhe bzw. im selben Abstand zur Transportebene angeordnet sein. Einer der Antriebe kann auch näher an der Transportebene angeordnet sein als der andere Antrieb.

In der hier gezeigten Ausführungsform ist ferner eine Steuereinrichtung 380, die analog zu der Steuereinrichtung 180 entsprechend der Fig. 1 ausgestaltet sein kann, gezeigt. Diese ist mit den Antrieben 311 bzw. 341 verbunden, um diese über Steuersignale, die über geeignete Datenverbindungen (beispielsweise Kabel oder drahtlose Verbindungen) den Antrieben zur Verfügung gestellt werden können, in Drehung versetzen können.

Dabei kann vorgesehen sein, dass die Antriebe 311 und 341 unabhängig voneinander gesteuert werden können, so dass diese beispielsweise mit unterschiedlicher Drehzahl betrieben werden. Dies kann entweder permanent oder zumindest zeitweise (in begrenzten Zeitintervallen) erfolgen.

Alternativ kann, wenn nur eine Antriebsrolle für beide Transportbänder 321 und 331 vorgesehen ist, lediglich ein Antrieb (entweder der Antrieb 311 oder der Antrieb 341) mit der durchgehenden Antriebsrolle verbunden sein, so dass der weitere Antrieb entfallen kann. Alternativ kann jedoch auch im Falle einer gemeinsamen Antriebsrolle für beide Transportbänder vorgesehen sein, dass beide Antriebe 311 und 341 mit der Antriebsrolle wirkverbunden sind. In diesem Fall kann einer der Antriebe als Reserveantrieb dienen, der von der Steuereinheit 380 angesteuert werden kann, um eine Antriebskraft zu bewirken, wenn der andere Antrieb ausfällt. Alternativ oder zusätzlich ist auch denkbar, dass beide Antriebe 311 und 341 im Falle einer gemeinsamen Antriebsrolle permanent betrieben werden, um unerwünschte, auf die Antriebsrolle bzw. das Transportband aufgrund ihrer Länge quer zur Transportrichtung wirkende Drehmomente zu vermeiden oder zu reduzieren.

Fig. 4a und b zeigen verschiedene Ausführungsformen zur Realisierung der lösbaren Verbindung des Bandkörpers 402 mit dem Grundgestell 401 der Transporteinrichtung 400.

In den hier dargestellten Ausführungsformen umfassen die eine Seitenfläche 416 des Grundgestells 401 und die entsprechende Seitenfläche des Grundkörpers 427 des Bandkörpers 402 zueinander komplementäre Verbindungselemente, die zusammen die lösbare Verbindung zwischen Bandkörper und Grundgestell bilden. Wie bereits erwähnt, muss der Bandkörper nicht zwangsläufig einen Grundkörper 427 aufweisen und das entsprechende Verbindungselement kann auch an einem anderen Teil des Bandkörpers angeordnet sein. Diesbezüglich ist diese Ausführungsform daher nicht beschränkend.

Grundsätzlich können Verbindungselemente entsprechend Ausführungsformen der Erfindung einen Kraftschluss und/oder Formschluss bilden, um den Bandkörper 402 an dem Grundgestellt 401 lösbar zu befestigen.

In der Fig. 4a bilden die zueinander komplementären Verbindungselemente einen Schnappverschluss. Der Bandkörper umfasst ein Eingriffselement 453, das in eine Ausnehmung 451 der Seitenfläche 416 eingelegt werden kann. In dem Bereich der Ausnehmung 451 ist wenigstens ein Federelement 452 angeordnet, das bevorzugt in einer Richtung zur Ausnehmung 451 hin vorgespannt ist. Wird das Eingriffselement 453 von oben in Richtung der Ausnehmung 451 geführt, gibt das Federelement 452 zumindest teilweise nach, so dass das Eingriffselement 453 in die Ausnehmung 451 eingeführt werden kann. Anschließend spannt das Federelement 452 aufgrund seiner Vorspannung in Richtung der Ausnehmung 451 das Eingriffselement 453 in der Ausnehmung 451 fest. Während grundsätzlich zumindest ein Federelement 452 ausreichend ist, können, wie in Fig. 4a dargestellt, auch zwei Federelemente vorgesehen sein, die das Eingriffselement 453 in die Ausnehmung 451 einspannen. Zum Lösen des Bandkörpers 402 von dem Grundgestell 401 muss eine Kraft gegen die Vorspannung des Federelements 452 bewirkt werden, um das Eingriffselement 453 aus der so entstandenen Kraftschlussverbindung zu lösen. Hiermit wird ein zuverlässiges Befestigen des Bandkörpers 402 an dem Grundgestell gewährleistet, wobei diese Verbindung bevorzugt ohne weiteres Werkzeug wieder gelöst werden kann.

Dabei kann bevorzugt sein, wenn eine Bewegungsrichtung und insbesondere eine Vorspannrichtung des Federelements 452 senkrecht zu der Transportrichtung der Verpackungen in der Transporteinrichtung ausgestaltet ist. Hierdurch können in Richtung oder entgegen der Richtung der Transportrichtung wirkende Kräfte nicht zu einem unabsichtlichen Lösen des Eingriffselements 453 aus der Ausnehmung 451 führen.

In Fig. 4b ist eine zur Fig. 4a alternative Ausführungsform dargestellt, bei der die zueinander komplementären Verbindungselemente eine Spannvorrichtung bilden.

In dieser Ausführungsform umfasst der Bandkörper 402 beziehungsweise, wie hier dargestellt, der Grundkörper 427 des Bandkörpers 402 ein Eingriffselement 463. Das Eingriffselement 463 kann durch eine Ausnehmung 462 in die Seitenfläche 416 des Grundgestells 401 eingeführt werden.

In der Ausnehmung 462 oder im Bereich der Ausnehmung 462 ist ein Spannelement 461 angeordnet, das in Richtung des Eingriffselements 463 gespannt werden kann. Dazu kann ein Betätigungselement vorgesehen sein (beispielsweise eine Schraube), durch deren Drehung die Lage des Spannelements 461 innerhalb der Ausnehmung und relativ zu dem Eingriffselement 463 entlang der Richtung P verändert werden kann.

Die Oberfläche des Eingriffselements 463 und die dazu komplementäre Oberfläche des Spannelements 461 können bevorzugt so ausgestaltet sein, dass nicht nur ein Reibschluss (als Kraftschluss) zwischen den Oberflächen des Eingriffselements 463 und des Spannelements 461 bewirkt wird, sondern weiterhin ein Formschluss realisiert wird. Beispielsweise kann das Spannelement eine Ausnehmung umfassen, in die ein hier nicht weiter dargestelltes zweites Eingriffselement, das Teil des Eingriffselements 463 ist, (bevorzugt nur bei korrekter Positionierung des Bandkörpers relativ zum Grundgestell 401) eingreifen kann. Hierdurch wird zusätzlich zu dem Reibschluss auch ein Formschluss bewirkt, so dass ein unabsichtliches Fehlstellen oder Lösen des Bandkörpers 402 im Betrieb der Transporteinrichtung vermieden wird.

Entsprechend den bisher beschriebenen Ausführungsformen kann vorgesehen sein, dass entlang jeder Seitenfläche des Grundgestells wenigstens ein Verbindungselement vorgesehen ist, um mit einem Verbindungselement des Bandkörpers 402 eine lösbare Verbindung herzustellen. Bevorzugt sind auf jeder Seite bzw. an jeder Seitenfläche 416 des Grundkörpers wenigstens zwei entsprechende Verbindungselemente und am Bandkörper 402 dazu komplementäre Verbindungselemente vorgesehen, die in einem Abstand entlang der Transportrichtung zueinander angeordnet sind. Hierdurch wird ein korrektes und zuverlässiges Positionieren des Bandkörpers am Grundgestell gewährleistet.

Es kann ferner vorgesehen sein, dass die Verbindungselemente sich unterscheiden oder identisch sind. Beispielsweise kann vorgesehen sein, dass an einer Seitenfläche des Grundgestells Verbindungselemente entsprechend der Ausführungsform der Fig. 4a angeordnet sind und auf der gegenüberliegenden Seitenfläche des Grundgestells Verbindungselemente entsprechend der Ausführungsform der Fig. 4b. Hierdurch wird zusätzlich zu der sicheren Verbindung zwischen Bandkörper und Grundgestell gewährleistet, dass auch die Ausrichtung des Bandkörpers relativ zum Grundgestell korrekt ist und der Bandkörper nicht versehentlich verkehrt herum eingebaut wird. Analoges gilt, wenn die Verbindungselemente auf jeder Seitenfläche (bei Vorsehen von wenigstens zwei Verbindungselementen pro Seitenfläche) unterschiedlich ausgebildet sind.

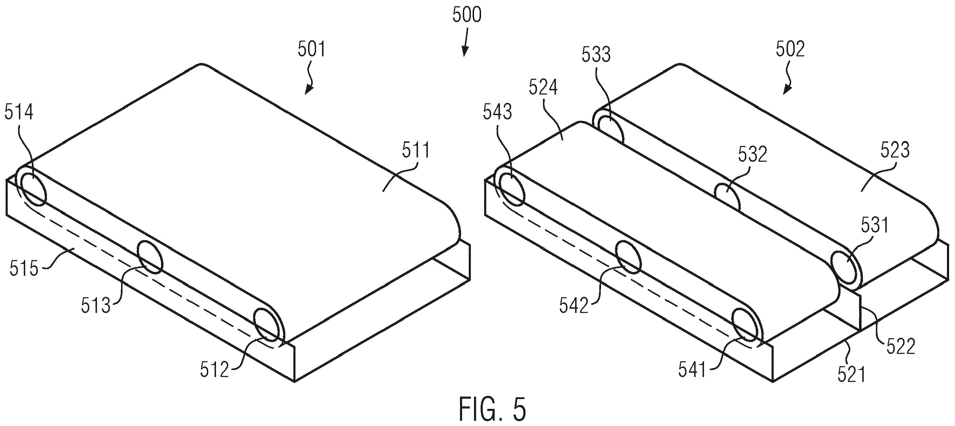

Fig. 5 zeigt eine Ausführungsform eines Sortiments 500 von Bandkörpern. In der hier gezeigten Ausführungsform umfasst das Sortiment zwei Bandkörper 501 und 502. Die Anzahl der Bandkörper des Sortiments 500 ist jedoch nicht beschränkend zu verstehen und kann je nach möglichen Anforderungen (beispielsweise hinsichtlich der zu transportierenden Verpackungen oder Verpackungsteile) auch eine Vielzahl unterschiedlicher Bandkörper umfassen, die sich beispielsweise hinsichtlich der Ausgestaltung des Transportbandes (Transportkette, Gummibelag, etc.) unterscheiden.

Entsprechend dieser Ausführungsform umfasst das Sortiment 500 jedoch zumindest zwei Bandkörper 501 und 502, die sich hinsichtlich ihrer Anzahl von Transportbändern unterscheiden.

Der Bandkörper 501 des Sortiments 500 umfasst hier beispielhaft genau ein Transportband 511, dem eine Antriebsrolle 513 und gegebenenfalls weitere Rollen 512 und 514 zugeordnet sind. Der Bandkörper umfasst hier beispielhaft weiterhin einen Grundkörper 515.

Der zweite Bandkörper 502 des Sortiments 500 umfasst im Gegensatz zum Bandkörper 501 genau zwei Transportbänder 523 und 524. In der hier gezeigten Ausführungsform ist jedem dieser Transportbänder 523 und 524 jeweils eine Antriebsrolle 532 und 542 zugeordnet. Ferner sind jedem dieser Transportbänder weitere optionale Rollen 531 und 533 für das Transportband 523 und optionale Rollen 541 und 543 für das Transportband 524 zugeordnet. Analog zur Fig. 3 ist ein Element 522 als Teil des Grundkörpers 521 des Bandkörpers 502 vorgesehen, in dem die jeweiligen Antriebsrollen und zusätzlichen optionalen Rollen drehbar gelagert sein können.

Alternativ zu den unabhängigen Rollen 531 bis 533 bzw. 541 bis 543 kann analog zu den bisher beschriebenen Ausführungsformen auch vorgesehen sein, dass eine einzige Antriebsrolle (beispielsweise die Antriebsrolle 542) zum Antrieb beider Transportbänder 523 und 524 entsprechend der Beschreibung der Fig. 3 vorgesehen ist. Auch die zusätzlichen Rollen können optional in diesem Fall als gemeinsame Rollen vorgesehen sein oder, entsprechend der in Fig. 5 gezeigten Ausführungsformen, für jedes Transportband 523 und 524 separat bereitgestellt sein.

Wenn auch in Fig. 5 nicht dargestellt, so umfasst jeder der Bandkörper 501, 502 bevorzugt Verbindungselemente zum lösbaren Verbinden des Bandkörpers 501 und 502 mit einem Grundgestell analog zu den bisher beschriebenen Ausführungsformen, insbesondere entsprechend den Ausführungsformen der Fig. 4a und/oder der Fig. 4b.

## Patentansprüche

1. Transporteinrichtung (100) zum Transportieren von Verpackungen (130) oder Verpackungsbestandteilen, die Transporteinrichtung (100) umfassend ein Grundgestell (101) und einen mit dem Grundgestell lösbar verbundenen Bandkörper (102), wobei der Bandkörper ein Transportband (121), das eine Transportebene (T) definiert, und eine Antriebsrolle (122) zum Antreiben des Transportbandes (121) umfasst, wobei das Grundgestell (101) einen Antrieb (111) und ein Getriebe (112) zum Übertragen einer Kraft von dem Antrieb (111) auf die Antriebsrolle (122) umfasst, wobei die Antriebsrolle (122) und der Antrieb (111) auf derselben Seite der Transportebene (T) angeordnet sind und der Abstand des Antriebs (111) zur Transportebene (T) größer ist als der Abstand der Antriebsrolle (122) zur Transportebene (T) und/oder wobei die Antriebsrolle (122) und eine Komponente des Getriebes (112) auf derselben Seite der Transportebene (T) angeordnet sind und der Abstand der Komponente des Getriebes (112) zur Transportebene (T) größer ist als der Abstand der Antriebsrolle (122) zur Transportebene (T).

2. Transporteinrichtung (300) nach Anspruch 1, wobei der Bandkörper (302) ein zweites Transportband (331) und eine zweite Antriebsrolle (332) zum Antreiben des zweiten Transportbandes (331) umfasst, und wobei der Antrieb (311) an einer ersten Seitenfläche (316) des Grundgestells (301) angeordnet ist und ein zweiter Antrieb (341) an einer zweiten Seitenfläche (317) des Grundgestells (301) angeordnet ist, wobei das Grundgestell (301) ein zweites Getriebe (342) zum Übertragen einer Kraft von dem zweiten Antrieb (341) auf die zweite Antriebsrolle (332) umfasst und die zweite Antriebsrolle (332) und der zweite Antrieb (342) auf derselben Seite der Transportebene (T) angeordnet sind und der Abstand des zweiten Antriebs (342) zur Transportebene (T) größer ist als der Abstand der zweiten Antriebsrolle (332) zur Transportebene (T).

3. Transporteinrichtung (300) nach Anspruch 2, wobei die Antriebsrolle (322) und die zweite Antriebsrolle (332) um parallele Antriebsachsen drehbar sind.

4. Transporteinrichtung (100) nach einem der Ansprüche 1 bis 3, wobei das Grundgestell (101) ein Abdeckelement (113) zum Abdecken des Antriebs (111) umfasst und wobei das Abdeckelement (113) sich wenigstens teilweise zwischen der Transportebene (T) und dem Antrieb (111) erstreckt.

5. Transporteinrichtung (100) nach einem der Ansprüche 1 bis 4, wobei das Getriebe (112) wenigstens zwei um zueinander beabstandete, parallele Drehachsen drehbar gelagerte Zahnräder (181, 183) umfasst und ein erstes Zahnrad (181) mit einer Antriebsachse (184) des Antriebs (111) und ein zweites Zahnrad (183) mit der Antriebsrolle (122) wirkverbunden sind.

6. Transporteinrichtung (100) nach einem der Ansprüche 1 bis 5, wobei der Antrieb und/oder der zweite Antrieb lösbar mit dem Grundgestell (101) verbunden ist.

7. Transporteinrichtung (100) nach einem der Ansprüche 1 bis 6, wobei der Bandkörper (102) als werkzeuglos von dem Grundgestell (101) lösbar ausgebildet ist.

8. Transporteinrichtung (100) nach einem der Ansprüche 1 bis 7, wobei das Grundgestell (101) zwei parallel zueinander verlaufende Seitenfläche (116, 117) umfasst, die quer zur Transportrichtung (E) beabstandet angeordnet sind und wobei der Bandkörper (102) in Aufnahmen (451, 461) der zwei Seitenflächen (116, 117) angeordnet ist.

9. Transporteinrichtung (100) nach einem der Ansprüche 1 bis 8, wobei der Antrieb (111) ein Servomotor ist und wobei eine Drehachse des Servomotors (111) parallel oder senkrecht zu einer Rotationsachse der Antriebsrolle (122) verläuft.

10. Transporteinrichtung (100) nach einem der Ansprüche 1 bis 9, wobei der Bandkörper (102) und das Grundgestell (101) zueinander komplementäre, lösbare Verbindungselemente (115, 125) umfassen.

11. Transporteinrichtung (100) nach Anspruch 10, wobei die zueinander komplementären, lösbaren Verbindungselemente eine Spannvorrichtung oder einen Schnappverschluss bilden.

12. Bandkörper (102) zur Verwendung in einer Transporteinrichtung (100) nach einem der Ansprüche 1 bis 11, wobei der Bandkörper (102) wenigstens ein Transportband (121) und wenigstens eine Antriebsrolle (122) umfasst.

13. Sortiment (500) von Bandkörpern (501, 502) zur Verwendung in einer Transporteinrichtung (100) nach einem der Ansprüche 1 bis 11, wobei zumindest ein erster Bandkörper (501) des Sortiments (500) genau ein Transportband (511) und genau eine Antriebsrolle (513) umfasst und wobei zumindest ein zweiter Bandkörper (502) des Sortiments (500) genau zwei Transportbänder (523, 524) und genau zwei Antriebsrollen (532, 542) umfasst.
